(19) Europäisches Patentamt
European Patent Office
Office européen des brevets

(11) EP 3 778 059 A1

(12) EUROPÄISCHE PATENTANMELDUNG

(43) Veröffentlichungstag:
17.02.2021  Patentblatt 2021/07

(21) Anmeldenummer: 19191585.9

(22) Anmeldetag: 13.08.2019

(51) Int Cl.:
B21D 28/34 (2006.01)        H01B 13/00 (2006.01)
B21D 37/04 (2006.01)        B25D 17/08 (2006.01)
B26D 7/26 (2006.01)

(84) Benannte Vertragsstaaten:
AL AT BE BG CH CY CZ DE DK EE ES FI FR GB
GR HR HU IE IS IT LI LT LU LV MC MK MT NL NO
PL PT RO RS SE SI SK SM TR
Benannte Erstreckungsstaaten:
BA ME
Benannte Validierungsstaaten:
KH MA MD TN

(71) Anmelder: Schleuniger AG
3608 Thun (CH)

(72) Erfinder:
• BÜRGISSER, Marco
6330 Cham (CH)
• IMHOLZ, Klemens
6300 Zug (CH)
• IMFELD, Ruedi
6312 Steinhausen (CH)

(74) Vertreter: Patentbüro Paul Rosenich AG
BGZ
9497 Triesenberg (LI)

(54) **WERKZEUGAUFNAHMEVORRICHTUNG, ARBEITSMASCHINE MIT DER WERKZEUGAUFNAHMEVORRICHTUNG SOWIE VERFAHREN ZUM POSITIONIEREN EINES WERKZEUGS AN EINER WERKZEUGAUFNAHMEVORRICHTUNG**

(57) Die Erfindung betrifft eine Werkzeugaufnahmevorrichtung (11) zum Aufnehmen eines Werkzeugs (13) an einer Arbeitsmaschine mit einer Halteeinheit (20) und mit einer Verschlusseinheit (30), wobei die Verschlusseinheit (30) von einer Aufnahmeposition in eine Fixierposition überführbar ist und wobei die Halteeinheit (20) einen Aufnahmeabschnitt (21) zum zumindest abschnittsweisen Aufnehmen der Verschlusseinheit (30) aufweist. Die Verschlusseinheit (30) weist einen Werkzeughalteabschnitt (33) zum vorpositionierten Halten eines Werkzeugs (13) auf. Weiters betrifft die Erfindung eine Arbeitsmaschine mit dieser Werkzeugaufnahmevorrichtung und ein Verfahren zum Positionieren eines Werkzeugs (13) an einer Arbeitsmaschine.

FIG 2

EP 3 778 059 A1

**Beschreibung**

Die Erfindung betrifft eine Werkzeugaufnahmevorrichtung nach dem Oberbegriff des Anspruchs 1, eine Arbeitsmaschine mit der Werkzeugaufnahmevorrichtung nach Anspruch 13 und ein Verfahren zum Positionieren eines Werkzeugs an einer Werkzeugaufnahmevorrichtung nach Anspruch 15.

Das Umrüsten von einem ersten Werkzeug zu einem weiteren Werkzeug in einer Arbeitsmaschine, mit dem unterschiedliche Werkstücke bearbeitet werden, bedingt zumeist ein Anhalten der Arbeitsmaschine. Damit in der industriellen Fertigung von Werkstücken ein Stillstand der Arbeitsmaschine gesamthaft kaum eine Rolle spielt, muss der Benutzer der Arbeitsmaschine im Stande sein, das Umrüsten der Arbeitsmaschine von einem ersten Werkzeug zu einem weiteren Werkzeug mit einem minimalen Zeitaufwand auszuführen.

Bei Kabelverarbeitungmaschinen werden die Herstellungsprozesse halbautomatisch ausgeführt, sodass der Benutzer einer Kabelverarbeitungsmaschine im Stande sein muss, ein Werkzeug schnell und fehlerfrei an der entsprechenden Stelle an der Arbeitsmaschine anzuordnen.

Die DE 103 57 652 A1 offenbart eine Werkzeugmaschine mit einem Gehäuse und einem Schnellverschluss zum Befestigen eines rotierenden Werkzeugs an dem Gehäuse, wobei der Schnellverschluss aus zwei Verschlussteilen besteht. Einer der Verschlussteile ist am Gehäuse angeordnet und der weitere Verschlussteil ist im Werkzeug angeordnet. Das Gehäuse weist einen Aufnahmeabschnitt zum zumindest abschnittsweisen Aufnehmen eines der beiden Verschlussteile des Schnellverschlusses auf.

Nachteilig an dieser bekannten Lösung ist, dass der Benutzer der Werkzeugmaschine beim Montieren des Werkzeugs mehrere Handgriffe zum Anordnen und Befestigen des Werkzeugs benötigt, um die zwei Verschlussteile miteinander in Eingriff zu bringen, sowie beim Demontieren des Werkzeugs mehrere Handgriffe zum Lösen und Entfernen des Werkzeugs benötigt, um die zwei Verschlussteile ausser Eingriff zu bringen.

Es ist die Aufgabe der vorliegenden Erfindung, einen oder mehrere Nachteile des Standes der Technik zu beheben. Insbesondere soll eine Werkzeugaufnahmevorrichtung geschaffen werden, mit der die ergonomische Handhabung beim Werkzeugwechsel an einer Werkzeugaufnahmevorrichtung verbessert wird. Weiters soll eine Arbeitsmaschine mit einer Werkzeugaufnahmevorrichtung sowie ein Verfahren zum Positionieren eines Werkzeugs an einer Werkzeugaufnahmevorrichtung geschaffen werden, sodass ein Werkzeug einfach und zeitsparend an einer Werkzeugaufnahmevorrichtung angeordnet werden kann.

Diese Aufgabe wird durch die in den unabhängigen Patentansprüchen definierten Vorrichtungen und Verfahren gelöst. Vorteilhafte Weiterbildungen sind in den Figuren, der Beschreibung und insbesondere in den abhängigen Patentansprüchen dargelegt.

Eine erfindungsgemässe Werkzeugaufnahmevorrichtung zum Aufnehmen eines Werkzeugs an einer Arbeitsmaschine umfasst eine Halteeinheit und eine Verschlusseinheit, wobei die Verschlusseinheit von einer Aufnahmeposition in eine Fixierposition überführbar ist und wobei die Halteeinheit einen Aufnahmeabschnitt zum zumindest abschnittsweisen Aufnehmen der Verschlusseinheit aufweist. Die Verschlusseinheit weist einen Werkzeughalteabschnitt zum vorpositionierten Halten eines Werkzeugs auf.

Der Benutzer der Arbeitsmaschine kann das Werkzeug einfach, mit einer Hand in den Werkzeughalteabschnitt der Verschlusseinheit positionieren, wobei sich die Verschlusseinheit während diesem Positionieren des Werkzeugs in der Aufnahmeposition befindet und das Werkzeug dabei vorpositioniert in dem Werkzeughalteabschnitt gehalten wird. Dabei ist das Anordnen des Werkzeugs an der Verschlusseinheit, ohne direkte Sicht des Benutzers auf den Werkzeughalteabschnitt, möglich. Als vorpositioniertes Halten wird hier vorliegend ein an dem Werkzeughalteabschnitt der Verschlusseinheit selbstständiges Halten des Werkzeugs verstanden, sodass das Werkzeug selbsthemmend (kraftschlüssig) und/oder formschlüssig und/oder magnetisch in dem Werkzeughalteabschnitt sitzt. Somit kann sich das Werkzeug an dem Werkzeughalteabschnitt der Verschlusseinheit vor dem Überführen der Verschlusseinheit in die Fixierposition selbstständig und spielfrei in Position halten, ohne dass der Benutzer das Werkzeug festhalten muss. Das vorpositionierte Halten des Werkzeugs vereinfacht dem Benutzer einen Werkzeugwechsel an der Arbeitsmaschine, da das Herausfallen des Werkzeugs von dem Werkzeughalteabschnitt verhindert werden kann. Somit ist eine ergonomische Handhabung sichergestellt.

Insbesondere ist das Werkzeug mithilfe dieser Werkzeugaufnahmevorrichtung an einer Kabelverarbeitungsmaschine als Arbeitsmaschine aufnehmbar. Die Verarbeitung von Kabeln in der Industrie erfordert einen besonders gut geschulten Benutzer, der über mehrere Stunden hochkonzentriert sein muss, um den Herstellungsprozess zu beschleunigen. Daher ist die zuvor beschriebene Werkzeugaufnahmevorrichtung besonders geeignet, um den Benutzer einer Kabelverarbeitungsmaschine zu entlasten.

Vorteilhaft ist die Verschlusseinheit von der Aufnahmeposition in eine Entriegelungsposition überführbar. In der Entriegelungsposition befindet sich die Verschlusseinheit zumindest abschnittsweise in der Halteeinheit und kann einfach wieder zurück in die Aufnahmeposition überführt werden. Dabei ist das Werkzeug selbst vom Benutzer bevorzugt nicht von der Werkzeugaufnahmevorrichtung entnehmbar.

Vorzugsweise weist die Verschlusseinheit einen Befestigungsabschnitt zum Befestigen der Verschlusseinheit an der Halteeinheit auf. Der Befestigungsabschnitt ist ein definierter Abschnitt an der Verschlusseinheit, mithilfe dem die Verschlusseinheit an der Halteeinheit befestigt werden kann, sodass die Verschlusseinheit nur mit diesem definierten Abschnitt an der Halteeinheit gesichert wird. Dabei ist der Befestigungsabschnitt der Verschlusseinheit vorteilhaft von dem Werkzeughalteabschnitt örtlich getrennt, sodass das Werkzeug dort einfach angeordnet werden kann und beispielsweise, das Werkzeug an der Halteeinheit nicht versehentlich einklemmbar ist.

Insbesondere ist ein Verbindungselement vorhanden, mithilfe diesem die Verschlusseinheit an der Halteeinheit relativ zu dieser bewegbar angeordnet ist. Dieses Verbindungselement garantiert eine kompakte Verbindung zwischen der Verschlusseinheit und der Halteeinheit und ermöglicht ein reproduzierbares Überführen der Verschlusseinheit von der Fixierposition in die Aufnahmeposition.

Vorteilhaft weist die Halteeinheit einen Verschlusshalteabschnitt auf, an dem das Verbindungselement angeordnet ist. Dabei kann das Verbindungselement als Schwenkachse ausgebildet sein, wobei die Verschlusseinheit mithilfe des Verbindungselements an der Halteeinheit angeordnet ist. Dies verbessert die Zugänglichkeit des Werkzeugs zum Werkzeughalteabschnitt, sodass der Benutzer das Werkzeug dort problemlos anordnen kann. Dabei ist das Verbindungselement beispielsweise als Bolzen oder als Gelenk ausgebildet.

Vorteilhaft ist die Verschlusseinheit mit dem Werkzeughalteabschnitt schwenkbar an der Halteeinheit angeordnet. Damit ist ein kompakter und zuverlässiger Verschlussmechanismus bereitgestellt.

Bevorzugterweise weist die Verschlusseinheit ein Langloch mit einer Längsachse auf, wobei die Verschlusseinheit zumindest entlang der Längsachse des Langlochs linear bewegbar ist. Als lineare Bewegung wird hier vorliegend ein Bewegen zumindest in eine Raumrichtung relativ zur Halteeinheit verstanden. Dabei kann das Verbindungselement in das Langloch eingreifen und somit die Verschlusseinheit beim Bewegen entlang des Langlochs reproduzierbar führen, sodass eine Fehlbedienung bei der Handhabung vermeidbar ist. Beispielsweise bewegt sich die Verschlusseinheit zumindest entlang eines definierten Hubweges entlang des Langlochs, wobei die Verschlusseinheit dabei von der Fixierposition in die Entriegelungsposition überführbar ist.

Vorzugsweise weist die Verschlusseinheit einen Vorspannabschnitt auf. Der Vorspannabschnitt ist örtlich von dem Werkzeughalteabschnitt getrennt. Damit ist eine einfache Verbindung zwischen der Verschlusseinheit und der Halteeinheit möglich und eine örtliche Trennung vom Werkzeugabschnitt gegeben.

Insbesondere weist der Vorspannabschnitt ein elastisches Vorspannelement zum einfachen Fixieren der Verschlusseinheit an der Halteeinheit, auf.

Vorteilhaft ist das Vorspannelement ausgebildet, die Verschlusseinheit an deren Fixierposition vorgespannt zu positionieren. Damit wird eine kompakte Verbindung zwischen Verschlusseinheit und Halteeinheit ermöglicht, da die Werkzeugaufnahmevorrichtung somit kein zusätzliches Fixierelement zum Fixieren der Verschlusseinheit an der Halteeinheit benötigt und die Verschlusseinheit endlagestabil in deren Fixierposition gehalten.

Alternativ oder ergänzend ist das Vorspannelement ausgebildet, die Verschlusseinheit an deren Aufnahmeposition vorgespannt zu positionieren. Damit ist die Verschlusseinheit endlagestabil in deren Aufnahmeposition gehalten.

Bevorzugterweise ist der Vorspannabschnitt zwischen dem Werkzeughalteabschnitt und dem Befestigungsabschnitt angeordnet. Somit sind der Befestigungsabschnitt und der Vorspannabschnitt örtlich von dem Werkzeughalteabschnitt getrennt, sodass ein kompakter und einfacher Aufbau der Werkzeugaufnahmevorrichtung möglich ist, welche vom Benutzer besonders einfach bedient werden kann.

Vorzugsweise nimmt der Aufnahmeabschnitt der Halteeinheit die Verschlusseinheit vollständig auf, wobei dabei die Verschlusseinheit vollständig in der Fixierposition überführt sein kann. Somit ist ein verbessertes Halten der Verschlusseinheit in der Halteeinheit möglich, wodurch das Werkzeug an der Werkzeugaufnahmevorrichtung stabil angeordnet ist.

Vorteilhaft weist die Verschlusseinheit eine Verschlusseinheitslänge auf, welche derart dimensioniert ist, dass die Verschlusseinheit vollständig in dem Aufnahmeabschnitt der Halteeinheit aufgenommen werden kann. Damit kann eine Werkzeugaufnahmevorrichtung mit einem kompakten und platzsparenden Aufbau realisiert werden.

Bevorzugterweise weist der Aufnahmeabschnitt der Halteeinheit einen Halteabschnitt mit einem Fixieranschlag zum temporären Fixieren des Werkzeugs in der Fixierposition auf. Der Fixieranschlag verhindert ein selbstständiges bzw. ungewünschtes Öffnen der Verschlusseinheit im Betrieb der Arbeitsmaschine. Das Werkzeug kann in der Fixierposition am Halteabschnitt der Halteeinheit zumindest punktuell anliegen und damit eine Wirkverbindung eingehen, sodass das Werkzeug in dem Werkzeughalteabschnitt einfach fixierbar ist.

Insbesondere weist die Halteeinheit einen Aufnahmeanschlag auf, wodurch das Versetzen bzw. Verschwenken der Verschlusseinheit beim Überführen in die Aufnahmeposition reproduzierbar gestoppt werden kann. Der Aufnahmeanschlag gewährleistet somit einen kurzen Weg beim Überführen der Verschlusseinheit von der Aufnahmeposition in die Fixierposition, sodass dieser Prozessschritt zeitlich verkürzt werden kann.

Bevorzugt ist der Halteabschnitt keilförmig ausgebildet. Dadurch kann die Verschlusseinheit beim Schliessen zumindest abschnittsweise entlang dem keilförmigen Halteabschnitt als eine Führungskulisse gleiten, wodurch sich diese einfach, beispielsweise durch einfaches Drücken, in die Fixierposition überführen lässt. Weiters kann die Verschlusseinheit beim Überführen in die Aufnahmeposition selbständig entlang des keilförmigen Halteabschnitts gleiten.

Vorteilhaft weist der keilförmige Halteabschnitt zumindest einen definierten Keilwinkel auf, wobei die Verschlusseinheit beim Überführen vorteilhaft in die Aufnahmeposition gleitet. Dabei ist der Keilwinkel derart dimensioniert, dass die Federkraft des elastischen Vorspannelements die Haftreibung und/oder die Gleitreibung zwischen der Verschlusseinheit und der Halteeinheit beim Überführen von der Fixierposition in die Aufnahmeposition überwindet. Andernfalls kann somit die Verschlusseinheit entlang des keilförmigen Halteabschnitts zurück in die Aufnahmeposition gleiten, wenn die Verschlusseinheit nicht in die Fixierposition überführbar ist. Beispielsweise kann dies der Fall sein, wenn ein ungeeignetes bzw. falsches Werkzeug an der Verschlusseinheit angeordnet wird.

Bevorzugterweise weist der Werkzeughalteabschnitt der Verschlusseinheit zumindest einen Aufnahmeraum zum Aufnehmen zumindest eines Werkzeugs auf. Darin kann das Werkzeug angeordnet werden, sodass dieses zumindest an zwei Auflagepunkten in dem Aufnahmeraum mit der Verschlusseinheit selbstständig gehalten wird. In der Fixierposition der Verschlusseinheit ist somit das Werkzeug an zumindest drei Auflagepunkten in der Werkzeugaufnahmevorrichtung spielfrei fixiert, wodurch ein stabiles und spielfreies Halten ermöglicht wird.

Insbesondere weist der Aufnahmeraum am Werkzeughalteabschnitt einen Halteanschlag auf, sodass die Verschlusseinheit einfach in der Fixierposition gehalten werden kann. Dabei kann der Halteanschlag als Haltenase ausgebildet sein, welche eine definierte Haltenasenlänge aufweist, wodurch dieser konstruktiv besonders einfach ausgebildet ist.

Vorteilhaft ist der Halteanschlag an dem Werkzeughalteabschnitt ausgebildet, mit dem Fixieranschlag am Halteabschnitt der Halteeinheit zumindest temporär eine Wirkverbindung einzugehen. Damit kann die Verschlusseinheit stabil in der Fixierposition gehalten werden.

Vorteilhaft ist der Hubweg entlang dem Langloch an der Verschlusseinheit grösser als die Haltenasenlänge, sodass die Verschlusseinheit einfach von der Fixierposition in Aufnahmeposition überführbar ist.

Vorteilhaft ist der Aufnahmeraum am Werkzeughalteabschnitt u-förmig ausgebildet. Dadurch lässt sich beispielsweise ein Werkzeug mit einem zylindrischen Grundkörper mit einem kreisrunden Grundkörperdurchmesser einfach in dem Aufnahmeraum anordnen. Werkzeuge mit einem zylindrischen Grundkörper lassen sich unabhängig von einer Rotation des Werkzeugs um die Zylinderlängsachse in dem Aufnahmeraum anordnen, wobei der Aufnahmeraum dabei typischerweise einen Aufnahmeraumdurchmesser aufweist.

Vorteilhaft weist die Verschlusseinheit zumindest am Werkzeughalteabschnitt eine Verschlusseinheitswand mit einer Verschlusseinheitswandstärke auf. Damit ist das Werkzeug stabil im Aufnahmeraum haltbar.

Vorteilhaft ist die Verschlusseinheit von der Fixierposition bis zur Aufnahmeposition zumindest entlang eines Öffnungswinkels überführbar. Damit kann ein effizientes und reproduzierbares Schwenken der Verschlusseinheit entlang einer definierten Schwenkstrecke bereitgestellt werden.

Insbesondere ist der Öffnungswinkel mithilfe der Verschlusseinheitswandstärke, der Aufnahmeraumdurchmesser, des Keilwinkels und der Verschlusseinheitslänge definiert, wobei der Öffnungswinkel als

$$\text{Öffnungswinkel } \beta > tan^{-1}(\frac{\text{Aufnahmeraumdurchmesser } c + \text{Verschlusseinheitswandstärke } d}{\text{Verschlusseinheitslänge } e})$$

definiert ist. Damit lässt sich ein minimaler Öffnungswinkel definieren, sodass das Werkzeug einfach an der Verschlusseinheit angeordnet werden kann, wenn sich diese in der Aufnahmeposition befindet.

Vorteilhaft ist der Keilwinkel grösser als ein Reibungswinkel, wobei der Reibungswinkel abhängig von den Materialeigenschaften der Paarung Verschlusseinheit-Halteeinheit ist. Beispielsweise beträgt der Reibungswinkel bei einer Paarung Verschlusseinheit-Halteeinheit, welche beide aus Stahl bestehen, 11.3 Grad. Damit ist die Verschlusseinheit selbständig in die Aufnahmeposition überführbar.

Vorteilhaft ist der Keilwinkel kleiner gleich 90 Grad dem minus Öffnungswinkel, sodass ein Überführen der Verschlusseinheit in die Aufnahmeposition einfach ausführbar ist.

Vorzugsweise weist der Aufnahmeraum am Werkzeughalteabschnitt eine Werkzeugkodierung auf. Damit kann nur jenes Werkzeug in den Aufnahmeraum aufgenommen werden, welches von der Werkzeugkodierung zugelassen wird. Mit anderen Worten ausgedrückt, können keine Werkzeuge in dem Aufnahmeraum angeordnet werden, welche ein von der Werkzeugcodierung unterschiedliche Kodierung aufweisen. Der Kodierungsmechanismus ist dabei vorteilhaft bistabil ausgebildet, sodass sich die Verschlusseinheit samt Werkzeughalteabschnitt nur in die Fixierposition überführen lässt, wenn ein passendes Werkzeug richtig in den Aufnahmeraum eingesetzt ist. Weiters ermöglicht eine solche Werkzeugkodierung ein selbstzentriertes Anordnen des Werkzeugs in der Werkzeugaufnahmevorrichtung.

Vorteilhaft ist die Werkzeugkodierung im Aufnahmeraum als zumindest ein Vorsprung ausgebildet, womit ein Werkzeug formschlüssig und einfach am Werkzeughalteabschnitt angeordnet werden kann.

Insbesondere weist die Werkzeugkodierung zumindest einen weiteren Vorsprung auf. Damit kann die Werkzeugkodierung komplex ausgestaltet werden und Werkzeuge mit unterschiedlicher Kodierung werden nicht in dem Aufnahmeraum aufgenommen. Damit kann der Benutzer ohne direkte Sicht auf den Werkzeughalteabschnitt erkennen, ob das Werkzeug angeordnet werden kann.

Bevorzugterweise ist eine Entriegelungseinrichtung zum Entriegeln der Verschlusseinheit vorhanden. Damit kann der Verschlusseinheit von der Fixierposition in eine Entriegelungsposition einfach, beispielsweise vom Benutzer einhändig, überführt werden und ein unbeabsichtigtes Lösen wird verhindert.

Insbesondere ist die Entriegelungseinrichtung ausgebildet, die Verschlusseinheit von der Aufnahmeposition in die Fixierposition zu überführen. Damit ist ein reproduzierbares Überführen der Verschlusseinheit von der Fixierposition in die Aufnahmeposition möglich, welche einfach vom Benutzer gesteuert werden kann.

Vorzugsweise umfasst die Entriegelungseinrichtung einen Entriegelungsspin, der ausgebildet ist, einer Vorspannkraft an der Verschlusseinheit entgegenzuwirken. Damit weist die Entriegelungseinrichtung einen einfachen Aufbau auf, kann einfach bedient werden und ist platzsparend an der Werkzeugaufnahmevorrichtung der Halteeinheit angeordnet.

Insbesondere ist der Entriegelungsspin in Richtung der Längsachse des Langlochs bewegbar. Dies ermöglicht ein einfaches Öffnen der Verschlusseinheit. Damit kann der Entriegelungsspin der Vorspannkraft an der Verschlusseinheit effizient entgegenwirken. Dabei kann der Entriegelungsspin von einer Halteposition, bei der die Verschlusseinheit in der Halteeinheit gehalten wird, in eine Freigabeposition, bei der die Verschlusseinheit freigegeben wird, überführt werden.

Insbesondere befindet sich die Verschlusseinheit in deren Entriegelungsposition, wenn sich der Entriegelungsspin in dessen Freigabeposition befindet. Damit kann eine besonders effiziente Entriegelungseinrichtung bereitgestellt werden.

Vorteilhaft ist der Entriegelungsspin zumindest an der der Verschlusseinheit zugwandten Seite abgeschrägt, sodass die Verschlusseinheit entlang der Abschrägung in Richtung zu der Aufnahmeposition gleiten kann und insbesondere die Verschlusseinheit in Richtung zur Aufnahmeposition einfach schwenkbar ist.

Bevorzugterweise umfasst die Entriegelungseinrichtung ein Rückführelement zum Rückführen des Entriegelungsspin von der Freigabeposition in die Halteposition. Damit ist das Entriegelungsspin kontrollierbar und reproduzierbar in die Halteposition rückführbar.

Vorteilhaft ist das Rückführelement als ein Federelement ausgebildet. Damit ist der Entriegelungsspin über das Rückführelement selbstständig, mithilfe der Federkraft, in die Halteposition rückführbar.

Eine erfindungsgemässe Arbeitsmaschine umfasst eine Werkzeugaufnahmevorrichtung wie hier vorliegend beschrieben. Neben zuvor genannten Vorteilen, lässt sich die Bedienungssicherheit und somit die Arbeitssicherheit für den Bediener der Arbeitsmaschine verbessern sowie ergonomisch einfacher als im Stand der Technik einfacher gestalten, insbesondere wenn die Arbeitsmaschine als Kabelverarbeitungsmaschine ausgebildet ist.

Bevorzugterweise ist die Halteeinheit der Werkzeugaufnahmevorrichtung lösbar an der Arbeitsmaschine angeordnet. Damit kann die Werkzeugaufnahmevorrichtung von der Arbeitsmaschine separiert werden und an eine andere Arbeitsmaschine angeordnet werden, sodass das Einsatzgebiet der Werkzeugaufnahmevorrichtung mit einem Werkzeug vergrösserbar ist.

Ein erfindungsgemässes Verfahren zum Positionieren eines Werkzeugs an einer Werkzeugaufnahmevorrichtung umfasst zumindest die folgenden Schritte:

a) Öffnen einer Verschlusseinheit, wobei die Verschlusseinheit von einer Fixierposition in eine Aufnahmeposition zur Aufnahme des Werkzeugs überführt wird;

b) Anordnen eines Werkzeugs an einem Werkzeughalteabschnitt der Verschlusseinheit, wobei das Werkzeug anschliessend vorpositioniert in der Werkzeughalteabschnitt gehalten wird;

c) Schliessen der Verschlusseinheit, wobei die Verschlusseinheit zusammen mit dem in dem Werkzeughalteabschnitt angeordneten Werkzeug von der Aufnahmeposition in Fixierposition überführt wird.

Der Benutzer der Arbeitsmaschine kann das Werkzeug einfach, mit einer Hand in den Werkzeughalteabschnitt der Verschlusseinheit positionieren, wobei sich die Verschlusseinheit während diesem Positionieren des Werkzeugs in der Aufnahmeposition befindet und das Werkzeug dabei vorpositioniert in dem Werkzeughalteabschnitt gehalten wird. Damit kann sich das Werkzeug an dem Werkzeughalteabschnitt der Verschlusseinheit vor dem Überführen der Verschlusseinheit in die Fixierposition selbstständig, beispielsweise in einer vertikalen Position, spielfrei halten, ohne dass der Benutzer das Werkzeug festhalten muss. Dabei ist das Anordnen des Werkzeugs an der Verschlusseinheit ohne direkte Sicht des Benutzers auf den Werkzeughalteabschnitt möglich. Das vorpositionierte Halten des Werkzeugs vereinfacht dem Benutzer einen Werkzeugwechsel an der Arbeitsmaschine, da das Herausfallen des Werkzeugs aus dem Werkzeughalteabschnitt verhindert werden kann. Somit ist eine ergonomische Handhabung erfüllt. Insbesondere wird für das Verfahren die zuvor bzw. auch nachfolgend noch beschriebene Werkzeugaufnahmevorrichtung verwendet.

Bevorzugterweise wird beim Öffnen im Schritt a) die Verschlusseinheit in die Aufnahmeposition zur Aufnahme des Werkzeugs geschwenkt, wobei die Verschlusseinheit an einer Halteeinheit angeordnet ist. Das schwenkbare Anordnen der Verschlusseinheit an die Halteeinheit verbessert die Zugänglichkeit des Werkzeugs zum Werkzeughalteabschnitt, sodass der Benutzer das Werkzeug dort problemlos anordnen kann.

Vorzugsweise wird beim Schliessen der Verschlusseinheit im Schritt c) die Verschlusseinheit linear bewegt und sowie in die Fixierposition geschwenkt. Eine linear bewegbare und schwenkbar Verschlusseinheit ermöglicht eine kleine und kompakte Bauform der Werkzeugaufnahmevorrichtung.

Bevorzugterweise wird das Werkzeug im Schritt b) an eine Werkzeugkodierung im Aufnahmeraum am Werkzeughalteabschnitt angeordnet. Damit kann das Werkzeug selbstzentriert in der Aufnahme gehalten werden. Einerseits kann verhindert werden, dass ein ungeeignetes bzw. falsches Werkzeug im Aufnahmeraum angeordnet wird und andererseits wird die Benutzung der Arbeitsmaschine für den Benutzer vereinfacht, da eine Fehlanordnung eines ungeeigneten Werkzeugs verhinderbar ist.

Vorzugsweise wird vor dem Schritt a) die Verschlusseinheit von der Fixierposition in eine Entriegelungsposition überführt. Damit wird die Verschlusseinheit schrittweise von Position zu Position überführt und somit kontrolliert in die Fixierposition überführt.

Vorteilhaft wird eine Entriegelungseinrichtung der Werkzeugaufnahmevorrichtung betätigt. Die Entriegelungseinrichtung verhindert ein selbstständiges Überführen der Verschlusseinheit in die Aufnahmeposition, sodass ein zuverlässiges Positionieren des Werkzeugs an Arbeitsmaschine gewährleistet ist.

Bevorzugterweise gleitet die Verschlusseinheit beim Schliessen der Verschlusseinheit im Schritte c) entlang eines keilförmigen Halteabschnitts der Halteeinheit. Damit lässt sich die Verschlusseinheit einfach, beispielsweise durch einfaches Drücken, in die Fixierposition überführen.

Vorteilhaft gleitet die Verschlusseinheit beim Überführen in die Aufnahmeposition selbständig entlang des keilförmigen Halteabschnitts in die Aufnahmeposition. Damit wird der Vorgang beim Öffnen der Verschlusseinheit mechanisch unterstützt bzw. beschleunigt, sodass das Werkzeug zeitnahe in dem Aufnahmeraum vom Benutzer angeordnet wird.

Vorzugsweise wird das Werkzeug in der Werkzeugaufnahmevorrichtung mithilfe einer Drei-Punkt-Auflage spielfrei in der Fixierposition gehalten, wobei zumindest ein erster Auflagepunkt an einem Halteabschnitt der Halteeinheit vorhanden ist. Damit steht das Werkzeug in der Fixierposition mit den zumindest einen ersten Auflagepunkt in einer Haltewirkverbindung und wird stabil und spielfrei in der Werkzeugaufnahmevorrichtung gehalten.

Insbesondere wird das Werkzeug in der Fixierposition zumindest abschnittsweise an den zumindest einen erster Auflagepunkt gedrückt, wodurch eine verbesserte Haltewirkverbindung ausgebildet wird.

Weitere Vorteile, Merkmale und Einzelheiten der Erfindung ergeben sich aus der nachfolgenden Beschreibung, in der unter Bezugnahme auf die Zeichnungen Ausführungsbeispiele der Erfindung beschrieben sind.

Die Bezugszeichenliste ist wie auch der technische Inhalt der Patentansprüche und Figuren Bestandteil der Offenbarung. Die Figuren werden zusammenhängend und übergreifend beschrieben. Gleiche Bezugszeichen bedeuten gleiche Bauteile, Bezugszeichen mit unterschiedlichen Indices geben funktionsgleiche oder ähnliche Bauteile an.

Es zeigen dabei:

Fig. 1     eine erste Ausführungsform einer erfindungsgemässen Werkzeugaufnahmevorrichtung für ein erstes Werkzeug, in einer perspektivischen Darstellung,

Fig. 2     die Werkzeugaufnahmevorrichtung gemäss Fig. 1, wobei sich die Verschlusseinheit in einer Fixierposition befindet, in einer Schnittdarstellung,

Fig. 3     die Werkzeugaufnahmevorrichtung gemäss Fig. 2, wobei sich die Verschlusseinheit in einer Entriegelungsposition befindet, in einer Schnittdarstellung,

Fig. 4     die Werkzeugaufnahmevorrichtung gemäss Fig. 2, wobei sich die Verschlusseinheit in einer Aufnahmeposition befindet, in einer Schnittdarstellung,

Fig. 5     eine weitere Ausführungsform der Werkzeugaufnahmevorrichtung für ein weiteres Werkzeug, in einer perspektivischen Darstellung,

Fig. 6     die Werkzeugaufnahmevorrichtung gemäss Fig. 5, für das weitere Werkzeug, in einer Schnittdarstellung,

Fig. 7     eine weitere Ausführungsform der Werkzeugaufnahmevorrichtung für ein weiteres Werkzeug, in einer perspektivischen Darstellung,

Fig. 8     die Werkzeugaufnahmevorrichtung gemäss Fig. 7, für das weitere Werkzeug, in einer Schnittdarstellung,

Fig. 9      eine weitere Ausführungsform der Werkzeugaufnahmevorrichtung für das erste Werkzeug, in einer perspektivischen Darstellung,

Fig. 10     die Werkzeugaufnahmevorrichtung gemäss Fig. 9 ohne Werkzeug, wobei sich die Verschlusseinheit in der Aufnahmeposition befindet, in einer Schnittdarstellung,

Fig. 11     die Werkzeugaufnahmevorrichtung gemäss Fig. 10 ohne Werkzeug, wobei sich die Verschlusseinheit in einer Entriegelungsposition befindet, in einer Schnittdarstellung,

Fig. 12     die Werkzeugaufnahmevorrichtung gemäss Fig. 10 ohne Werkzeug, wobei sich die Verschlusseinheit in einer Fixierposition befindet, in einer Schnittdarstellung,

Fig. 13     die Werkzeugaufnahmevorrichtung gemäss Fig. 10 mit einem Werkzeug, wobei sich die Verschlusseinheit in der Aufnahmeposition befindet, in einer Schnittdarstellung,

Fig. 14     die Werkzeugaufnahmevorrichtung gemäss Fig. 10 mit einem Werkzeug, wobei sich die Verschlusseinheit in einer Entriegelungsposition befindet, in einer Schnittdarstellung,

Fig. 15     die Werkzeugaufnahmevorrichtung gemäss Fig. 10 mit einem Werkzeug, wobei sich die Verschlusseinheit in einer Fixierposition befindet, in einer Schnittdarstellung, und

Fig. 16     eine erfindungsgemässe Arbeitsmaschine mit einer Werkzeugaufnahmevorrichtung gemäss Fig. 1 in einer perspektivischen Darstellung.

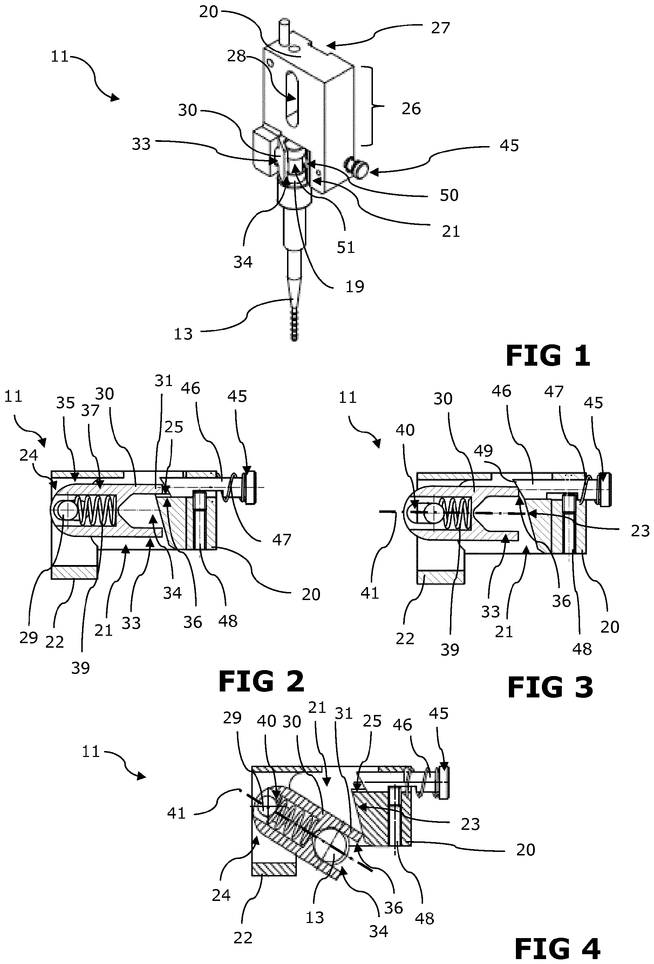

Fig. 1 bis Fig. 4 zeigen eine Werkzeugaufnahmevorrichtung 11 zum Aufnehmen eines Werkzeugs 13. Die Werkzeugaufnahmevorrichtung 11 weist eine Halteeinheit 20 und eine Verschlusseinheit 30 auf. An der Halteeinheit 20 ist ein Aufnahmeabschnitt 21 zum Aufnehmen der Verschlusseinheit 30 angeordnet, wobei der Aufnahmeabschnitt 21 einen Halteabschnitt 23 und einen Fixieranschlag 25 zum temporären Fixieren der Verschlusseinheit 30 in einer Fixierposition aufweist. In der Fixierposition ist die Verschlusseinheit 30 vollständig im Aufnahmeabschnitt 21 angeordnet. Der Fixieranschlag 25 verhindert ein selbstständiges bzw. ungewünschtes Öffnen der Verschlusseinheit 30 im Betrieb an einer Arbeitsmaschine. Der Halteabschnitt 23 ist keilförmig ausgebildet, sodass die Verschlusseinheit 30 beim Schliessen zumindest abschnittsweise entlang des keilförmigen Halteabschnitts 23 gleiten kann.

Weiters ist an der Halteeinheit 20 ein Aufnahmeanschlag 22 zum Positionieren der Verschlusseinheit 30 in der Aufnahmeposition vorhanden. Dabei wird die Verschlusseinheit 30 beim Überführen in die Aufnahmeposition gestoppt, wobei die Verschlusseinheit 30 bereichsweise am Aufnahmeanschlag 22 anliegt. Die Halteeinheit 20 weist zusätzlich einen Positionierabschnitt 26 zum Positionieren der Werkzeugaufnahmevorrichtung 11 an einer Arbeitsmaschine auf. Am Positionierabschnitt 26 sind ein Positionierlangloch 28 und eine Positionierfuge 27 vorhanden, mit dem die Halteeinheit 20 entlang der Längserstreckung des Positionierlanglochs 28 justierbar an der Arbeitsmaschine positionierbar ist und auch lösbar an der Arbeitsmaschine angeordnet ist. Weiters weist die Halteeinheit 20 einen Verschlusshalteabschnitt 24 auf, an dem ein Verbindungselement 29, welches hier vorliegend als Bolzen ausgebildet ist, angeordnet ist.

Die Verschlusseinheit 30 weist einen Werkzeughalteabschnitt 33 mit einem Aufnahmeraum 34 zum Aufnehmen und vorpositionierten Halten des Werkzeugs 13 auf, welches hier vorliegend als Stosswerkzeug ausgebildet ist (siehe dazu Fig. 1). Als vorpositionierten Halten wird hier vorliegend ein in dem Werkzeughalteabschnitt 33 der Verschlusseinheit 30 selbstständiges Halten des Werkzeugs 13 verstanden, das somit vorpositioniert in dem Werkzeughalteabschnitt 33 gehalten wird. Ein Stosswerkzeug ist insbesondere ausgebildet, eine Druckkraft auf ein Werkstück auszuüben.

Die Verschlusseinheit 30 weist weiters einen Befestigungsabschnitt 35 zum Befestigen der Verschlusseinheit 30 an der Halteeinheit 20 sowie einen Vorspannabschnitt 37 auf. Dabei ist der Befestigungsabschnitt 35 von dem Werkzeughalteabschnitt 33 und dem Vorspannabschnitt 37 örtlich getrennt, wobei der Vorspannabschnitt 37 zwischen dem Befestigungsabschnitt 35 und dem Werkzeughalteabschnitt 33 angeordnet ist.

Im Vorspannabschnitt 37 ist ein elastisches Vorspannelement 39 angeordnet. Das elastische Vorspannelement 39 ist ausgebildet, die Verschlusseinheit 30 an der Fixierposition sowie in der Aufnahmeposition in der Halteeinheit 30 vorgespannt zu positionieren. Als elastisches Vorspannelement 39 ist gemäss dieser Ausführungsform der Werkzeugaufnahmevorrichtung 11 eine Schraubenfeder vorgesehen.

Die Verschlusseinheit 30 ist von der Fixierposition (Fig. 2) in eine Entriegelungsposition (Fig. 3) und weiter in eine Aufnahmeposition (Fig. 4) überführbar sowie, in der umgekehrten Reihenfolge, wieder zurück in die Fixierposition überführbar. Die hier gezeigte Ausführungsform der Werkzeugaufnahmevorrichtungen zeigt eine schwenkbare Verschlusseinheit 30.

Die Verschlusseinheit 30 weist ein Langloch 40 mit einer Längsachse 41 auf, wobei die Verschlusseinheit 30 entlang der Längsachse 41 des Langlochs 40 linear bewegbar ist. Das Verbindungselement 29 ist als Schwenkhilfe ausgebildet, wobei die Verschlusseinheit 30 mithilfe des Verbindungselements 29 an der Halteeinheit 30 positioniert ist und die Verschlusseinheit 30 mit dem Werkzeughalteabschnitt 33 um das Verbindungselement 29 schwenkbar ist. Das Verbindungselement 29 der Halteeinheit 20 greift dabei in das Langloch 40 der Verschlusseinheit 30 ein und ist entlang eines definierten Hubweges im Langlochs 40 bewegbar.

Der Aufnahmeraum 34 am Werkzeughalteabschnitt 33 ist u-förmig ausgebildet und weist einen Halteanschlag 36 auf, sodass die Verschlusseinheit 30 einfach in der Fixierposition gehalten werden kann. Der gezeigte Halteanschlag 36 ist als Abschnitt der Verschlusseinheitswand 31 im Bereich des Aufnahmeraums 34 ausgebildet. Der Halteanschlag 36 ist ausgebildet, mit dem Fixieranschlag 25 am Halteabschnitt 23 der Halteeinheit 20 zumindest temporär, d.h. zumindest in der Fixierposition der Verschlusseinheit 30, eine Wirkverbindung einzugehen. Dabei liegt der Halteanschlag 36 am Fixieranschlag 25 berührend an.

Die Werkzeugaufnahmevorrichtung 11 weist eine Entriegelungseinrichtung 45 zum Entriegeln der Verschlusseinheit 30 auf. Die Entriegelungseinrichtung 45 ist an der Halteeinheit 20 angeordnet und ist ausgebildet, die Verschlusseinheit 30 von der Aufnahmeposition in die Entriegelungsposition zu überführen. Die Entriegelungseinrichtung 45 umfasst einen Entriegelungsspin 46, der von einer Halteposition (Fig. 2) in eine Freigabeposition (Fig. 3) überführbar ist und der ausgebildet ist, dabei der Vorspannkraft des elastischen Vorspannelements 39 an der Verschlusseinheit 30 entgegenzuwirken. Der Entriegelungsspin 46 ist dabei in Richtung der Längsachse 41 des Langlochs 40 bewegbar. Der Entriegelungsspin 46 ist an der der Verschlusseinheit 30 zugwandten Seite abgeschrägt, sodass die Verschlusseinheit 30 entlang der Abschrägung 49 in Richtung zu der Aufnahmeposition gleiten kann. Die Entriegelungseinrichtung 45 weist hier eine Schraubenfeder als Rückführelement 47 zum Rückführen des Entriegelungsspin 46 von der Freigabeposition in die Halteposition auf. Wird der Entriegelungsspin 46 von der Halteposition in die Freigabeposition überführt, dann wird auch die Verschlusseinheit 30 von der Fixierposition in deren Entriegelungsposition überführt (siehe Fig. 3). An der Halteeinheit 30 ist eine Entriegelungspinsicherung 48 als Bolzensicherung angeordnet, sodass ein unerwünschtes Separieren der Entriegelungsspin 46 von der Halteeinheit 20 verhinderbar und der Abschrägung 49 vom Entriegelungspin 46 jederzeit korrekt zur Verschlusseinheit 30 ausgerichtet ist. Der zuvor definierte Hubweg des Verbindungselements 29 erstreckt sich im Wesentlichen entlang der Längsachse 41 im Langloch 40, sodass die Verschlusseinheit 30 anschliessend von der Entriegelungsposition in die Aufnahmeposition schwenkbar ist.

Das in den Fig. 1 bis Fig. 4 gezeigte Werkzeug 13 weist einen zylindrischen Grundkörper 19 mit einem kreisrunden Grundkörperdurchmesser auf, sodass dieses einfach in den u-förmigen Aufnahmeraum 34 angeordnet werden kann. Sowohl das Werkzeug 13 wie auch der Aufnahmeraum 34 am Werkzeughalteabschnitt 33 der gezeigten Werkzeugaufnahmevorrichtung 11 weisen jeweils eine Werkzeugkodierung 50 bzw. 51 auf.

Anhand der Fig. 2 bis 4 wird nun nachfolgend ein Verfahren zum Positionieren eines Werkzeugs 13 an der Werkzeugaufnahmevorrichtung 11 gezeigt.

Das Verfahren umfasst das Öffnen der Verschlusseinheit 30, wobei die Verschlusseinheit 30 von der Fixierposition in eine Aufnahmeposition zur Aufnahme des Werkzeugs 13 überführt wird (Schritt a)). Bei diesem Überführen wird die Verschlusseinheit 30 vorerst von der Fixierposition (Fig. 2) in die Entriegelungsposition (Fig. 3) entlang der Längsachse 41 linear bewegt und anschliessend in die Aufnahmeposition (Fig. 4) geschwenkt. Das Überführen erfolgt mithilfe der Entriegelungseinrichtung 45, welche vom Benutzer der Werkzeugaufnahmevorrichtungen 11 per Hand betätigt wird. Die Entriegelungseinrichtung 45 weist dafür einen Entriegelungspin 46 auf, welcher an der Halteeinheit 20 angeordnet ist und mit dem die Verschlusseinheit 30 in die Entriegelungsposition bewegt wird. Dabei befindet sich der Entriegelungspin 46 vorerst in dessen Halteposition (Fig. 2), in der die Verschlusseinheit 30 in der Halteeinheit 20 gehalten wird, und wird in weiterer Folge in dessen Freigabeposition (Fig. 3) überführt, bei der die Verschlusseinheit 30 freigegeben wird. Beim diesem Überführen wirkt der Entriegelungsspin 46 der Vorspannkraft an der Verschlusseinheit 30 entgegen und übertrifft diese Vorspannkraft. Dabei wird das als Schraubenfeder ausgeführte Rückführelement 47 zusammengedrückt. Gleichzeitig wird das elastische Vorspannelement 39 im Vorspannabschnitt 37 zusammengedrückt und die Wirkverbindung zwischen dem Halteanschlag 36 am Werkzeughalteabschnitt 33 und dem Fixieranschlag 25 am Halteabschnitt 23 der Halteeinheit 20 gelöst (Fig. 3). Dabei wird das Verbindungselement 29 entlang des Langlochs 40 in Richtung zum Aufnahmeraum 34 hin zur Entriegelungsposition linear bewegt.

Anschliessend gleitet die Verschlusseinheit 30 entlang des keilförmigen Halteabschnitts 23 der Halteeinheit 20 in deren Aufnahmeposition, wobei die Schwenkbewegung der Verschlusseinheit 30 vom Aufnahmeanschlag 22 der Halteeinheit 20 gestoppt wird. Der Entriegelungspin 46 wird in weiterer Folge mithilfe des Rückführelements 47 von dessen Freigabeposition (Fig. 3) in dessen Halteposition (Fig. 4) überführt, wobei das Rückführelement 47 entspannt wird. Beim Gleiten der Verschlusseinheit 30 entlang der keilförmigen Halteabschnitts 23 der Halteeinheit 20 bewegt sich das Verbindungselement 29 linear entlang des Langlochs 40 in entgegengesetzter Richtung vom Aufnahmeraum 34 weg, wobei das elastische Vorspannelement 39 entspannt wird.

Anschliessend erfolgt das Anordnen des Werkzeugs 13 an dem Werkzeughalteabschnitt 33 der Verschlusseinheit 30, wobei das Werkzeug 13 vorpositioniert in dem Werkzeughalteabschnitt 33 gehalten wird ((Schritt b); Fig. 4). Ein im Aufnahmeraum 34 des Werkzeughalteabschnitts 33 vorpositioniert gehaltenes Werkzeug 13 wird in der Fig. 1 dargestellt.

Abschliessend erfolgt das Schliessen der Verschlusseinheit 30, wobei die Verschlusseinheit 30 zusammen mit dem in dem Werkzeughalteabschnitt 33 angeordneten Werkzeug 13 von der Aufnahmeposition (Fig. 4) in Fixierposition (Fig. 2) überführt wird (Schritt c)). Dabei gleitet die Verschlusseinheit 30 mit dem darin angeordneten Werkzeug 13 entlang des keilförmigen Halteabschnitts 23 vorerst in die Entriegelungsposition (Fig. 3) und wird anschliessend mithilfe des elastischen Vorspannelements 39 in die Fixierposition (Fig. 2) linear bewegt.

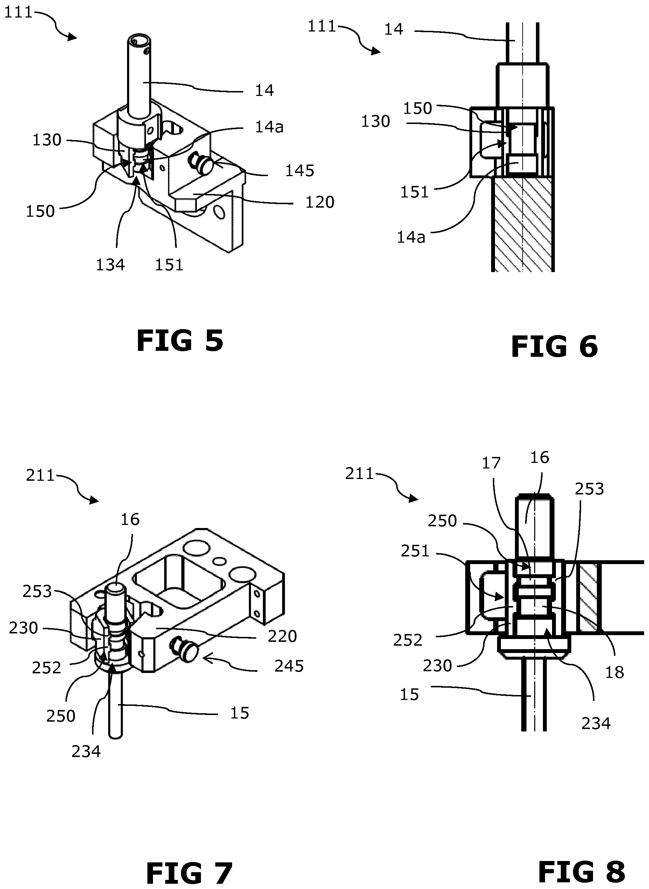

Das zuvor gezeigte Verfahren zum Positionieren eines Werkzeugs 13 an einer Arbeitsmaschine mit einer Werkzeugaufnahmevorrichtung 11 ist sowohl mithilfe der Werkzeugaufnahmevorrichtung 11 gemäss Fig. 1 bis 4, wie auch mit den Werkzeugaufnahmevorrichtung 111 gemäss Fig. 5 und Fig. 6 oder der Werkzeugaufnahmevorrichtung 211 gemäss Fig. 7 und Fig. 8 ausführbar.

Die Fig. 5 und Fig. 6 zeigen eine weitere Werkzeugaufnahmevorrichtungen 111, die im Wesentlichen wie die zuvor beschriebene Werkzeugaufnahmevorrichtung 11 ausgebildet ist. Die Werkzeugaufnahmevorrichtung 111 gemäss Fig. 5 und Fig. 6 unterscheiden sich von der Werkzeugaufnahmevorrichtung 11 gemäss Fig. 1 bis Fig. 4 darin, das ein unterschiedliches Werkzeug 14 im jeweiligen Aufnahmeraum 134 der Verschlusseinheit 130 angeordnet werden kann. Die Verschlusseinheit 130 wird in die Halteeinheit 120 der Werkzeugaufnahmevorrichtung 111 angeordnet, wobei die Halteeinheit 120 konstruktive Unterschiede zur Halteeinheit 20 aufweist. Ansonsten weist diese Werkzeugaufnahmevorrichtung 111 weitgehend die zuvor beschriebenen konstruktiven und funktionalen Merkmale auf. Das hier gezeigte Werkzeuge 14 weist ebenfalls einen zylindrischen Grundkörper 14a mit einem kreisrunden Grundkörperdurchmesser auf, sodass dieses einfach in den u-förmigen Aufnahmeraum 134 angeordnet werden kann. Die Werkzeugkodierungen 150 und 151 an der Werkzeugaufnahmevorrichtungen 111 sind zueinander komplementär ausgebildet, sodass nur ein Werkzeug 14 mit deiner entsprechenden Werkzeugkodierungen 150 in den Aufnahmeraum 134 mit der Werkzeugkodierungen 151 angeordnet werden kann. Mit anderen Worten ausgedrückt, es werden keine Werkzeuge in dem Aufnahmeraum 134 akzeptiert, welche eine zu der Werkzeugkodierung 151 nicht-komplementäre Werkzeugkodierung 150 aufweisen. Die gezeigte Werkzeugkodierung 150 am Werkzeug 14 ist durch unterschiedliche Durchmesser am zylindrischen Grundkörper des Werkzeuges 14 ausgebildet. Die gezeigte Werkzeugkodierung 151 im Aufnahmeraum 134 ist durch die dazu komplementären Vorsprünge im Aufnahmeraum 134 ausgebildet. An der Halteeinheit 120 ist die zuvor beschriebene Entriegelungseinrichtung 145 angeordnet.

Die Fig. 7 und Fig. 8 zeigen ein weitere Werkzeugaufnahmevorrichtung 211, die im Wesentlichen wie die zuvor beschriebene Werkzeugaufnahmevorrichtung 11 oder 111 ausgebildet ist. Die Werkzeugaufnahmevorrichtung 211 gemäss Fig. 7 und Fig. 8 unterscheiden sich beispielsweise von der Werkzeugaufnahmevorrichtung 11 gemäss Fig. 1 bis Fig. 4 darin, das ein unterschiedliches Werkzeug im Aufnahmeraum 234 der Verschlusseinheit 230 angeordnet werden kann. Ansonsten weisen diese Werkzeugaufnahmevorrichtung 211 weist weitgehend die zuvor beschriebenen Merkmale auf. Die Verschlusseinheit 230 wird in die Halteeinheit 220 der Werkzeugaufnahmevorrichtung 211 angeordnet. Der Aufnahmeraum 234 der Verschlusseinheit 230 weist eine weitere Werkzeugkodierung 250 bzw. 251 mit zwei Vorsprünge 252 und 253 auf, die sich in Richtung zur Aufnahmeraummitte des Aufnahmeraums 234 erstrecken. Die beiden Vorsprünge 252 und 253 weisen dabei unterschiedliche Vorsprungdicken auf, wodurch die Werkzeugkodierung 250 vorgegeben ist. Das gezeigte Werkzeug 15 weist an dessen zylindrischen Grundkörper 16 zwei Vertiefungen 17 und 18 auf, welche komplementär zu den Vorsprüngen 252 und 253 ausgebildet sind. An der Halteeinheit 220 ist die zuvor beschriebene Entriegelungseinrichtung 245 angeordnet.

Werkzeugkodierungen, welche unterschiedlich zu den zuvor gezeigten Werkzeugkodierungen ausgebildet sind, sind ebenfalls in den hier gezeigten Ausführungsformen der Werkzeugaufnahmevorrichtung einsetzbar. Insbesondere, wenn der Aufnahmeraum an der Verschlusseinheit beispielweise quaderförmig und/oder mehreckig ausgebildet ist. Darin kann beispielsweise ein Werkzeug mit einem Grundkörper, der einen entsprechenden quadratischen oder rechteckigen Grundkörperquerschnitt aufweist, angeordnet werden (nicht gezeigt).

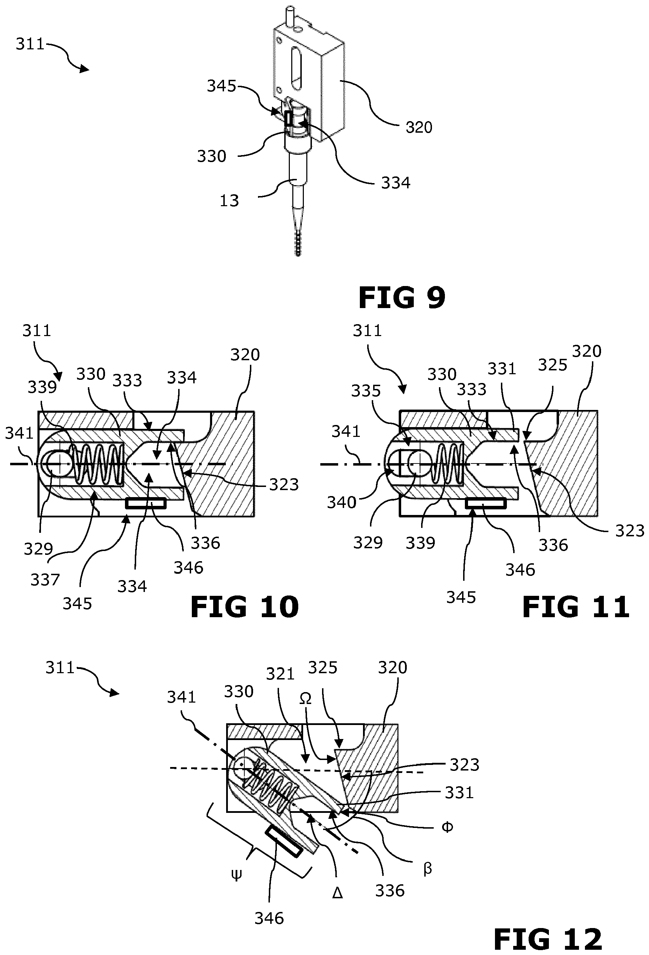

Die Fig. 9 bis Fig. 15 zeigen eine Werkzeugaufnahmevorrichtung 311 als eine weitere Ausführungsform der Werkzeugaufnahmevorrichtung 11 gemäss den Fig. 1 bis Fig. 4. Dabei weist diese Werkzeugaufnahmevorrichtung 311 weitgehend dieselben Merkmale bzw. Bauteile auf, wie bereits zuvor gezeigt. Die Werkzeugaufnahmevorrichtung 311 zeigt keinen Aufnahmeanschlag, wobei dieser jedoch auch an dieser Werkzeugaufnahmevorrichtung 311 vorhanden sein könnte. Die Werkzeugaufnahmevorrichtung 311 weist eine Entriegelungseinrichtung 345 auf, welche sich zur zuvor gezeigten Entriegelungseinrichtung gemäss der Fig. 1 bis Fig. 4 in deren Aufbau unterscheidet, jedoch nicht in deren Funktionsweise. Die Entriegelungseinrichtung 345 ist hier an der Verschlusseinheit 330 angeordnet.

Anhand der Fig. 10 bis Fig. 15 wird nun nachfolgend ein weiteres Verfahren zum Positionieren eines Werkzeugs 13 an einer Werkzeugaufnahmevorrichtung 311 gezeigt. Dabei weist die Werkzeugaufnahmevorrichtung 311, wie zuvor gezeigt, eine Verschlusseinheit 330 und eine Halteeinheit 220 auf, wobei die Verschlusseinheit 330 in deren Fixierposition im Aufnahmeabschnitt 321 der Halteeinheit angeordnet ist. Das nachführend gezeigte Verfahren zum Positionieren eines Werkzeugs 13 an einer Arbeitsmaschine mit einer Werkzeugaufnahmevorrichtung 311 ist sowohl mithilfe der Werkzeugaufnahmevorrichtung 11 gemäss Fig. 1 bis 4, wie auch mit der Werkzeugaufnahmevorrichtung 111 gemäss Fig. 5 und Fig. 6 oder der Werkzeugaufnahmevorrichtung 211 gemäss Fig. 7 und Fig. 8 ausführbar.

Das Verfahren umfasst das Öffnen der Verschlusseinheit 330, wobei die Verschlusseinheit 330 von der Fixierposition in eine Aufnahmeposition zur Aufnahme des Werkzeugs 13 überführt wird (Schritt a)). Bei diesem Überführen wird die Verschlusseinheit 330 vorerst von der Fixierposition (Fig. 10) in die Entriegelungsposition (Fig. 11) entlang der Längsachse 341 linear bewegt und anschliessend in die Aufnahmeposition (Fig. 12) geschwenkt. Das Überführen erfolgt mithilfe der Entriegelungseinrichtung 345, welche vom Benutzer der Werkzeugaufnahmevorrichtungen 311 per Hand betätigt wird. Die Entriegelungseinrichtung 345 weist dafür einen Entriegelungspin 346 auf, welcher an der Verschlusseinheit 330 angeordnet ist und mit dem die Verschlusseinheit 330 in die Entriegelungsposition bewegt wird. Dabei wird das Vorspannelement 339, welches hier als Schraubenfeder ausgebildet ist, im Vorspannabschnitt 337 zusammengedrückt und die Wirkverbindung zwischen dem Halteanschlag 336 am Werkzeughalteabschnitt 333 und dem Fixieranschlag 325 am Halteabschnitt 323 der Halteeinheit 320 gelöst (Fig. 11). Der Vorspannabschnitt 337 ist zwischen dem Befestigungsabschnitt 335 und dem Werkzeughalteabschnitt 333 an der Verschlusseinheit 330 angeordnet.

Gleichzeitig wird das Verbindungselement 329 entlang des Langlochs 340 in Richtung zum Aufnahmeraum 334 hin zur Entriegelungsposition linear bewegt.

Anschliessend gleitet die Verschlusseinheit 330 entlang der keilförmigen Halteabschnitts 323 der Halteeinheit 320 in deren Aufnahmeposition. Dabei weist der keilförmige Halteabschnitt 323 einen Keilwinkel $\alpha$ auf, wobei die Verschlusseinheit 330 beim Überführen in die Aufnahmeposition mit der Verschlusseinheitswand 331 entlang des keilförmigen Halteabschnitts 323 gleitet. Beim Öffnen wird somit die Verschlusseinheit 330 entlang des Öffnungswinkel $\beta$ von der Entriegelungsposition in die Aufnahmeposition geschwenkt. Dabei ist der Öffnungswinkel $\beta$ mithilfe der Verschlusseinheitswandstärke d, dem Aufnahmeraumdurchmesser c, des Keilwinkel $\alpha$ und der Verschlusseinheitslänge e beschrieben, wobei der Öffnungswinkel $\beta$ mit

$$\text{Öffnungswinkel } \beta > tan^{-1}(\frac{\text{Aufnahmeraumdurchmesser } c + \text{Verschlusseinheitswandstärke } d}{\text{Verschlusseinheitslänge } e})$$

definiert ist. Beim Gleiten der Verschlusseinheit 330 entlang des Keilwinkels $\alpha$ wird das elastische Vorspannelement 339 wieder auseinandergedrückt, sodass das Verbindungselement 329 entlang der Längsachse 341 im Langloch 340 bewegt wird. Dieser zuvor beschriebene konstruktive Aufbau, mit samt den funktionellen Merkmalen, der Halteeinheit 330 kann auch in den Ausführungsformen der Werkzeugaufnahmevorrichtungen gemäss Fig. 1 bis Fig. 8 eingesetzt werden und die zuvor beschriebenen Verfahren ergänzen.

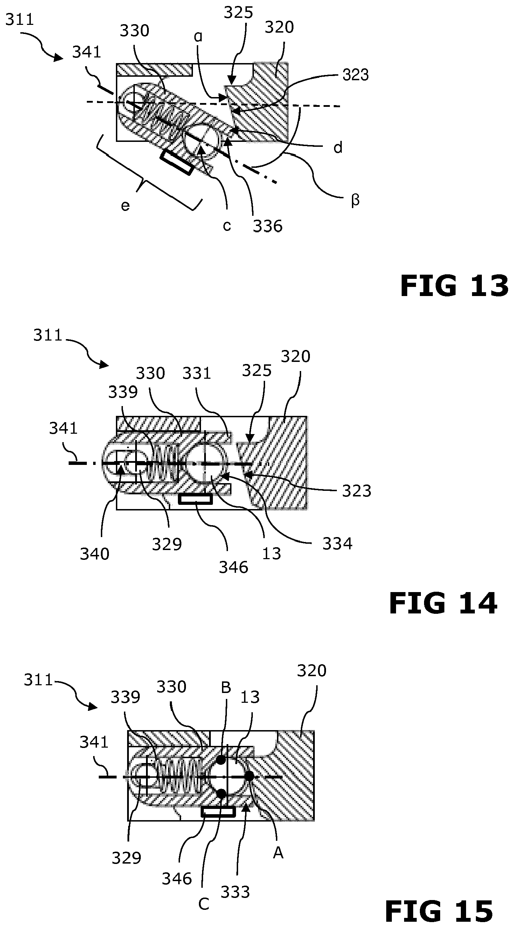

Anschliessend erfolgt das Anordnen des Werkzeugs 13 an dem Werkzeughalteabschnitt 333 der Verschlusseinheit 330, wobei das Werkzeug 13 selbsthemmend in dem Werkzeughalteabschnitt 333 gehalten wird (Schritt b); Fig. 13.). Ein im Aufnahmeraum 334 des Werkzeughalteabschnitts 333 selbsthemmend gehaltenes Werkzeug 13 wird in der Fig. 9 dargestellt.

Abschliessend erfolgt das Schliessen der Verschlusseinheit 330, wobei die Verschlusseinheit 330 zusammen mit dem in dem Werkzeughalteabschnitt 333 angeordneten Werkzeug 13 von der Aufnahmeposition (Fig. 13) in Fixierposition (Fig. 15) überführt wird (Schritt c)). Dabei gleitet die Verschlusseinheit 330 entlang des keilförmigen Halteabschnitts 323 vorerst in die Entriegelungsposition (Fig. 14) und wird anschliessend mithilfe des elastischen Vorspannelements 339 in die Fixierposition (Fig. 15) linear bewegt.

Fig. 15 zeigt die Werkzeugaufnahmevorrichtung 311, wobei sich die Verschlusseinheit 330 samt dem Werkzeug 13 in der Fixierposition befindet. Dabei wird das Werkzeug 13 in der Werkzeugaufnahmevorrichtung 311 mithilfe einer Drei-Punkt-Auflage in der Fixierposition gehalten. Ein erster Auflagepunkt A befindet sich an dem Halteabschnitt 323 der Halteeinheit 320, wobei das Werkzeug 13 in der Fixierposition an den erster Auflagepunkt A gedrückt wird. Weitere Auflagepunkte B und C befinden im Aufnahmeraum 334 der Verschlusseinheit 330, wobei das Werkzeug 13 dabei in der Fixierposition an die Auflagepunkte B und C gedrückt wird. Dieser Aufbau samt der Drei-Punkt-Auflage des Werkzeugs in der Fixierposition kann auch in den zuvor genannten Ausführungsformen der Werkzeugaufnahmevorrichtung 11 bzw. 111 bzw. 211 vorhanden sein.

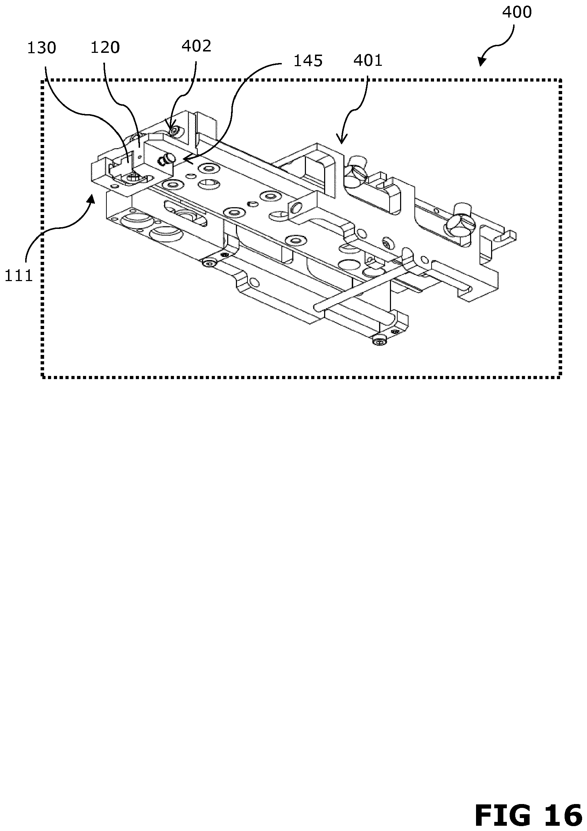

Fig. 16 zeigt eine Kabelverarbeitungsmaschine 400 als Arbeitsmaschine mit der Werkzeugaufnahmevorrichtung 111 gemäss den Fig. 5 bis Fig. 6 und mit einer Befestigungsvorrichtung 401. Alternative dazu können auch die zuvor gezeigten Werkzeugaufnahmevorrichtung 11 oder 211 oder 311 an der Befestigungsvorrichtung 401 angeordnet werden. Die Werkzeugaufnahmevorrichtung 111 weist die Halteeinheit 120 und die Verschlusseinheit 130 sowie die Entriegelungseinrichtung 145, wie zuvor beschrieben, auf und ist lösbar an der Befestigungsvorrichtung 401 der Kabelverarbeitungsmaschine 400 angeordnet, wobei Befestigungsmittel 402 zum Lösen der Werkzeugaufnahmevorrichtung 111 vorhanden sind.

**Bezugszeichenliste**

| 11 | Werkzeugaufnahmevorrichtung |
|----|------|
| 13 | Werkzeug |
| 14 | weiteres Werkzeug |
| 14a | zylindrischen Grundkörper von 14 |
| 15 | weiteres Werkzeug |
| 16 | zylindrischen Grundkörper von 15 |
| 17 | erste Vertiefung von 15 |
| 18 | zweite Vertiefung von 15 |
| 19 | zylindrischen Grundkörper von 13 |
| 20 | Halteeinheit |
| 21 | Aufnahmeabschnitt |
| 22 | Aufnahmeanschlag |
| 23 | Halteabschnitt |
| 24 | Verschlusshalteabschnitt |
| 25 | Fixieranschlag |
| 26 | Positionierabschnitt |
| 27 | Positionierfuge |
| 28 | Positionierlangloch |
| 29 | Verbindungselement |
| 30 | Verschlusseinheit |
| 31 | Verschlusseinheitswand |
| 33 | Werkzeughalteabschnitt |
| 34 | Aufnahmeraum |
| 35 | Befestigungsabschnitt |
| 36 | ersten Halteanschlag |
| 37 | Vorspannabschnitt |
| 38 | |
| 39 | elastisches Vorspannelement |
| 40 | Langloch |
| 41 | Längsachse |
| | |
| 45 | Entriegelungseinrichtung |
| 46 | Entriegelungsspin |
| 47 | Rückführelement |
| 48 | Entriegelungspinsicherung |
| 49 | Abschrägung von 46 |
| 50 | Werkzeugcodierung in 34 |
| 51 | Werkzeugcodierung von 13 |
| | |
| 111 | Werkzeugaufnahmevorrichtung |
| 120 | Halteeinheit |
| 130 | Verschlusseinheit |
| 134 | Aufnahmeraum |
| 145 | Entriegelungseinrichtung |
| 150 | Werkzeugcodierung in 134 |
| 151 | Werkzeugcodierung von 14 |
| | |
| 211 | Werkzeugaufnahmevorrichtung |
| 220 | Halteeinheit |
| 230 | Verschlusseinheit |
| 234 | Aufnahmeraum |
| 245 | Entriegelungseinrichtung |
| 250 | Werkzeugcodierung in 134 |
| 251 | Werkzeugcodierung von 15 |
| 252 | erster Vorsprung von 251 |
| 253 | zweiter Vorsprung von 251 |
| | |
| 311 | Werkzeugaufnahmevorrichtung |

| 320 | Halteinheit |
| 321 | Aufnahmeabschnitt |
| 323 | Halteabschnitt |
| 325 | Fixieranschlag |
| 329 | Verbindungselement |
| 330 | Verschlusseinheit |
| 333 | Werkzeughalteabschnitt |
| 334 | Aufnahmeraum |
| 335 | Befestigungsabschnitt |
| 336 | Halteanschlag |
| 337 | Vorspannabschnitt |
| 339 | elastisches Vorspannelement |
| 340 | Langloch |
| 341 | Längsachse |
| 346 | Entriegelungsspin |

| 400 | Arbeitsmaschine |
| 401 | Befestigungsvorrichtung |
| 402 | Befestigungsmittel |

| α | Keilwinkel |
| β | Öffnungswinkel |
| c | Aufnahmeraumdurchmesser |
| d | Verschlusseinheitswandstärke |
| e | Verschlusseinheitslänge |
| A-C | Auflagepunkte |

**Patentansprüche**

1. Werkzeugaufnahmevorrichtung (11; 111; 211; 311) zum Aufnehmen eines Werkzeugs (13; 14; 15) an einer Arbeitsmaschine, insbesondere an einer Kabelverarbeitungsmaschine, mit einer Halteeinheit (20; 120; 220; 320) und mit einer Verschlusseinheit (30; 130; 230; 330), wobei die Verschlusseinheit (30; 130; 230; 330) von einer Aufnahmeposition in eine Fixierposition überführbar ist und wobei die Halteeinheit (20; 120; 220; 320) einen Aufnahmeabschnitt (21; 321) zum zumindest abschnittsweisen Aufnehmen der Verschlusseinheit (30; 130; 230; 330) aufweist, **dadurch gekennzeichnet, dass** die Verschlusseinheit (30; 130; 230; 330) einen Werkzeughalteabschnitt (33; 333) zum vorpositionierten Halten eines Werkzeugs (13; 14; 15) aufweist.

2. Werkzeugaufnahmevorrichtung nach Anspruch 1, **dadurch gekennzeichnet, dass** die Verschlusseinheit (30; 130; 230; 330) einen Befestigungsabschnitt (35; 335) zum Befestigen der Verschlusseinheit (30; 130; 230; 330) an der Halteeinheit (20; 120; 220; 320) aufweist, wobei insbesondere ein Verbindungselement (29; 329) vorhanden ist, mit dem die Verschlusseinheit (30; 130; 230; 330) an der Halteeinheit (20; 120; 220; 320) relativ zu dieser bewegbar angeordnet ist und die Verschlusseinheit (30; 130; 230; 330) mit dem Werkzeughalteabschnitt (33; 333) vorteilhaft schwenkbar an der Halteeinheit (20; 120; 220; 320) angeordnet ist.

3. Werkzeugaufnahmevorrichtung nach Anspruch 1 oder 2, **dadurch gekennzeichnet, dass** die Verschlusseinheit (30; 130; 230; 330) ein Langloch (40; 340) mit einer Längsachse aufweist, wobei die Verschlusseinheit (30; 130; 230; 330) zumindest entlang der Längsachse (41; 341) des Langlochs (40; 340) linear bewegbar ist.

4. Werkzeugaufnahmevorrichtung nach einem der Ansprüche 1 bis 3, **dadurch gekennzeichnet, dass** die Verschlusseinheit (30; 130; 230; 330) einen Vorspannabschnitt (37; 337) aufweist, wobei der Vorspannabschnitt (37; 337) insbesondere ein elastisches Vorspannelement (39; 339) aufweist, wobei das Vorspannelement (39; 339) vorteilhaft ausgebildet ist, die Verschlusseinheit (30; 130; 230; 330) an der Fixierposition und/oder an der Aufnahmeposition vorgespannt zu positionieren.

5. Werkzeugaufnahmevorrichtung nach Anspruch 4, **dadurch gekennzeichnet, dass** der Vorspannabschnitt (37) zwischen dem Werkzeughalteabschnitt (33; 333) und dem Befestigungsabschnitt (35; 335) angeordnet ist.

6. Werkzeugaufnahmevorrichtung nach einem der Ansprüche 1 bis 5, **dadurch gekennzeichnet, dass** der Aufnahmeabschnitt (21; 321) der Halteeinheit (20; 120; 220; 320) die Verschlusseinheit (30; 130; 230; 330) vollständig aufnimmt.

7. Werkzeugaufnahmevorrichtung nach einem der Ansprüche 1 bis 6, **dadurch gekennzeichnet, dass** der Aufnahmeabschnitt (21; 321) der Halteeinheit (20; 120; 220; 320) einen Halteabschnitt (23; 323) mit einem Fixieranschlag (25; 325) zum temporären Fixieren des Werkzeugs (13; 14; 15) in der Fixierposition aufweist und insbesondere die Halteeinheit (20; 120; 220; 320) einen Aufnahmeanschlag (22) aufweist, wobei der Halteabschnitt (23; 323) bevorzugt keilförmig ausgebildet ist.

8. Werkzeugaufnahmevorrichtung nach einem der Ansprüche 1 bis 8, **dadurch gekennzeichnet, dass** der Werkzeughalteabschnitt (33; 333) der Verschlusseinheit (30; 130; 230; 330) zumindest einen Aufnahmeraum (34; 334) zum Aufnehmen zumindest eines Werkzeugs (13; 14; 15) aufweist, wobei der Aufnahmeraum (34; 334) am Werkzeughalteabschnitt (33; 333) insbesondere einen Halteanschlag (36; 336) aufweist, der vorteilhaft ausgebildet ist, mit dem Fixieranschlag (25; 325) am Halteabschnitt (23; 323) der Halteeinheit (20; 120; 220; 320) zumindest temporär eine Wirkverbindung einzugehen, und wobei der Aufnahmeraum (34; 334) am Werkzeughalteabschnitt (33; 333) vorteilhaft u-förmig ausgebildet ist.

9. Werkzeugaufnahmevorrichtung nach Anspruch 8, **dadurch gekennzeichnet, dass** der Aufnahmeraum (34; 334) am Werkzeughalteabschnitt (33; 333) eine Werkzeugcodierung (50; 150; 250) aufweist.

10. Werkzeugaufnahmevorrichtung nach einem der Ansprüche 1 bis 9, **dadurch gekennzeichnet, dass** eine Entriegelungseinrichtung (45; 345) zum Entriegeln der Verschlusseinheit (30; 130; 230; 330) vorhanden ist, wobei die Entriegelungseinrichtung (45; 345) insbesondere ausgebildet ist, die Verschlusseinheit (30; 130; 230; 330) von der Fixierposition in die Aufnahmeposition zu überführen.

11. Werkzeugaufnahmevorrichtung nach Anspruch 10, **dadurch gekennzeichnet, dass** die Entriegelungseinrichtung (45; 345) einen Entriegelungsspin (46; 346) umfasst, der ausgebildet ist, einer Vorspannkraft an der Verschlusseinheit (30; 130; 230; 330) entgegenzuwirken und der Entriegelungsspin (46; 346) insbesondere in Richtung der Längsachse des Langlochs (40; 340) bewegbar ist.

12. Werkzeugaufnahmevorrichtung nach Anspruch 11, **dadurch gekennzeichnet, dass** die Entriegelungseinrichtung (45; 345) ein Rückführelement (47) zum Rückführen des Entriegelungsspin (46; 346) von einer Freigabeposition in eine Halteposition umfasst, wobei das Rückführelement (47; 347) vorteilhaft als ein Federelement (48; 348) ausgebildet ist.

13. Arbeitsmaschine, insbesondere Kabelverarbeitungsmaschine (400) mit einer Werkzeugaufnahmevorrichtung (11; 111; 211; 311) nach einem der Ansprüche 1 bis 12.

14. Arbeitsmaschine nach Anspruch 13 **dadurch gekennzeichnet, dass** die Halteeinheit (20; 120; 220; 320) der Werkzeugaufnahmevorrichtung (11; 111; 211; 311) lösbar angeordnet ist.

15. Verfahren zum Positionieren eines Werkzeugs (13; 14; 15) an einer Werkzeugaufnahmevorrichtung, insbesondere mit einer Werkzeugaufnahmevorrichtung (11; 111; 211; 311) nach einem der Ansprüche 1 bis 14, wobei das Verfahren folgende Schritte umfasst:

   a) Öffnen einer Verschlusseinheit (30; 130; 230; 330), wobei die Verschlusseinheit (30; 130; 230; 330) von einer Fixierposition in eine Aufnahmeposition zur Aufnahme des Werkzeugs (13; 14; 15) überführt wird;
   b) Anordnen eines Werkzeugs (13; 14; 15) an einem Werkzeughalteabschnitt (33; 333) der Verschlusseinheit (30; 130; 230; 330), wobei das Werkzeug (13; 14; 15) anschliessend vorpositioniert in der Werkzeughalteabschnitt (33; 333) gehalten wird;
   c) Schliessen der Verschlusseinheit (30; 130; 230; 330), wobei die Verschlusseinheit (30; 130; 230; 330) zusammen mit dem in dem Werkzeughalteabschnitt (33; 333) angeordneten Werkzeug (13; 14; 15) von der Aufnahmeposition in Fixierposition überführt wird.

**FIG 1**

**FIG 2**

**FIG 3**

**FIG 4**

111

14

130

14a

150

134    151

145

120

**FIG 5**

111    14

150

130

151

14a

**FIG 6**

211

16

253

230

252

250

234

220

245

15

**FIG 7**

211    17    16    253

250

251

252

230

15

18

234

**FIG 8**

311

345

330

334

13

320

**FIG 9**

311

339

341

330 333 334

320

323

329

337

345

336

346

334

**FIG 10**

311

335

341

340

330 333

331 325

320

329 339

336

346

345

323

**FIG 11**

311

341

330

321 325 Ω

320

323

331

Φ

β

Ψ

Δ 336

346

**FIG 12**

**FIG 13**

**FIG 14**

**FIG 15**

FIG 16

Europäisches Patentamt
European Patent Office
Office européen des brevets

# EUROPÄISCHER RECHERCHENBERICHT

Nummer der Anmeldung

EP 19 19 1585

## EINSCHLÄGIGE DOKUMENTE

| Kategorie | Kennzeichnung des Dokuments mit Angabe, soweit erforderlich, der maßgeblichen Teile | Betrifft Anspruch | KLASSIFIKATION DER ANMELDUNG (IPC) |
|---|---|---|---|
| X | DE 296 17 574 U1 (ECKOLD VORRICHTUNG [DE]) 5. Februar 1998 (1998-02-05) * Seite 1, Absatz 1; Abbildungen 1-4 * ----- | 1-15 | INV. B21D28/34 H01B13/00 B21D37/04 B25D17/08 B26D7/26 |
| X | DE 39 32 629 A1 (WILA MASCHF BV [NL]) 5. April 1990 (1990-04-05) * Abbildungen 7-12 * ----- | 1-15 | |
| X | EP 0 180 146 A2 (MUHR & BENDER [DE]) 7. Mai 1986 (1986-05-07) * Abbildungen * ----- | 1-15 | |
| X | US 2018/345351 A1 (NATOLI DALE [US] ET AL) 6. Dezember 2018 (2018-12-06) * Abbildungen 1-4 * ----- | 1-15 | |
| A | JP S56 80916 U (N.N.) 30. Juni 1981 (1981-06-30) * Abbildungen * ----- | 1-15 | |

| | | | RECHERCHIERTE SACHGEBIETE (IPC) |
|---|---|---|---|
| | | | B21D H01B B25D B26F B26D |

Der vorliegende Recherchenbericht wurde für alle Patentansprüche erstellt

| Recherchenort | Abschlußdatum der Recherche | Prüfer |
|---|---|---|
| München | 17. Januar 2020 | Knecht, Frank |

KATEGORIE DER GENANNTEN DOKUMENTE

X : von besonderer Bedeutung allein betrachtet
Y : von besonderer Bedeutung in Verbindung mit einer anderen Veröffentlichung derselben Kategorie
A : technologischer Hintergrund
O : nichtschriftliche Offenbarung
P : Zwischenliteratur

T : der Erfindung zugrunde liegende Theorien oder Grundsätze
E : älteres Patentdokument, das jedoch erst am oder nach dem Anmeldedatum veröffentlicht worden ist
D : in der Anmeldung angeführtes Dokument
L : aus anderen Gründen angeführtes Dokument

 

& : Mitglied der gleichen Patentfamilie, übereinstimmendes Dokument

**ANHANG ZUM EUROPÄISCHEN RECHERCHENBERICHT**
**ÜBER DIE EUROPÄISCHE PATENTANMELDUNG NR.**

EP 19 19 1585

In diesem Anhang sind die Mitglieder der Patentfamilien der im obengenannten europäischen Recherchenbericht angeführten Patentdokumente angegeben.
Die Angaben über die Familienmitglieder entsprechen dem Stand der Datei des Europäischen Patentamts am
Diese Angaben dienen nur zur Unterrichtung und erfolgen ohne Gewähr.

17-01-2020

| Im Recherchenbericht angeführtes Patentdokument | | Datum der Veröffentlichung | Mitglied(er) der Patentfamilie | | Datum der Veröffentlichung |
|---|---|---|---|---|---|
| DE 29617574 | U1 | 05-02-1998 | KEINE | | |
| DE 3932629 | A1 | 05-04-1990 | DE | 3932629 A1 | 05-04-1990 |
| | | | JP | H02137619 A | 25-05-1990 |
| | | | NL | 8802402 A | 17-04-1990 |
| | | | US | 5022256 A | 11-06-1991 |
| EP 0180146 | A2 | 07-05-1986 | AT | 49520 T | 15-02-1990 |
| | | | DE | 3440093 A1 | 07-05-1986 |
| | | | EP | 0180146 A2 | 07-05-1986 |
| | | | ES | 8700583 A1 | 16-11-1986 |
| | | | US | 4646604 A | 03-03-1987 |
| US 2018345351 | A1 | 06-12-2018 | KEINE | | |
| JP S5680916 | U | 30-06-1981 | KEINE | | |

EPO FORM P0461

Für nähere Einzelheiten zu diesem Anhang : siehe Amtsblatt des Europäischen Patentamts, Nr.12/82

**IN DER BESCHREIBUNG AUFGEFÜHRTE DOKUMENTE**

*Diese Liste der vom Anmelder aufgeführten Dokumente wurde ausschließlich zur Information des Lesers aufgenommen und ist nicht Bestandteil des europäischen Patentdokumentes. Sie wurde mit größter Sorgfalt zusammengestellt; das EPA übernimmt jedoch keinerlei Haftung für etwaige Fehler oder Auslassungen.*

**In der Beschreibung aufgeführte Patentdokumente**

- DE 10357652 A1